# EUROPEAN PATENT APPLICATION

(11) **EP 3 654 675 A1**
(43) Date of publication of application: **20.05.2020**
(21) Application number: 19780133.5
(22) Date of filing: 04.09.2019
(51) Int. Cl.: H04W 4/42, H04W 4/44, H04W 24/02, H04W 24/04, H04W 24/08, H04L 12/24, H04L 12/26, B61L 27/00

(54) **TRAIN-GROUND INTEGRATED COMPREHENSIVE ANALYSIS PLATFORM**

(30) Priority: 27.09.2018 CN 201811130132
(71) Applicant: CRSC RESEARCH & DESIGN INSTITUTE GROUP CO., LTD., Fengtai District Beijing 100070 (CN)
(72) Inventor: CHENG, Yujia, Beijing 100070 (CN); YAN, Youwei, Beijing 100070 (CN); YAN, Xiang, Beijing 100070 (CN); JIANG, Lingming, Beijing 100070 (CN)
(74) Representative: Gill Jennings & Every LLP
(86) International application number: PCT/CN2019/104328
(87) International publication number: WO 2020/063280

(57) **Abstract**

Provided is a train-ground integrated analysis platform. The platform includes a data acquisition subsystem, a data integration subsystem, an integrated analysis subsystem and an integrated exhibition subsystem. The data integration subsystem is disposed on an upper layer of the data acquisition subsystem, the integrated analysis subsystem is disposed on an upper layer of the data integration subsystem, and the integrated exhibition subsystem is disposed on an upper layer of the integrated analysis subsystem. An integrated diagnosis can be performed on a train-ground communication state, a train-ground communication abnormality can be identified, and fault device and link can be located, improving availability of a C3 system.

## Description

This application claims priority to a Chinese patent application No. 201811130132.0 filed on September 27, 2018, disclosure of which is incorporated herein by reference in its entirety.

### TECHNICAL FIELD

The present invention relates to the technical field of rail traffic and, in particular, to a train-ground integrated analysis platform.

### BACKGROUND

A train-ground information communication timeout fault may happen to a Chinese train control system of level 3 (CTCS-3) (hereinafter referred to as C3). That is, the on-board automatic train protection (ATP) system fails to receive any application layer message from a radio block center (RBC) within a radio timeout determining interval (T _NVCONTACT). After the train-ground information communication timeout occurs, the on-board ATP will inform the driver of a radio connection timeout through a driver-machine interface (DMI) and control the train to output maximum service braking. In the field application of the CTCS-3, the train-ground information transmission timeout fault may be caused by an abnormal operation of an on-board communication unit, interference from Global System for Mobile Communications-Railway (GSM-R) network or an abnormal operation of a GSM-R network side device, an abnormal operation of an RBC side device and the like. The CTCS-3 is downgraded to the CTCS-2 (hereinafter referred to as C2) when the timeout fault occurs, and other faults are induced subsequent under certain conditions. The timeout fault has become one of the main problems affecting the stable operations of the CTCS-3.

At present, the railway industry proposes to focus on means for monitoring the C3 radio communication timeout, expand the application of an air interface monitoring technology for the C3 on-board devices, and require tests. Meanwhile, the new version of industry standards also requires that the C3 interface monitoring system implements Um and I_{GSM-R} interface monitoring functions.

### 1. Current application of the monitoring system

The CTCS-3 includes on-board devices and ground devices. The on-board side and the RBC side perform data interactions through a GSM-R radio network. In a data interaction process, the on-board device, the RBC and the communication network may all cause the radio timeout fault of the CTCS-3. Therefore, the on-board side, the RBC side and the communication network side are all provided with monitoring or detection means, to facilitate the location and analysis of a fault point and a fault reason of the CTCS-3 radio timeout fault.

The existing monitoring and detection means include: logs of the ATP, a dynamic monitoring system (DMS) for train control devices, a Datalogger, an RBC maintenance terminal, a dynamic detection tool of an interference monitoring system, a network manager for radio communication devices, a monitoring system (referred to as "three-interface monitoring system") for an Abis interface, an A interface and a primary rate interface (PRI) interface of the GSM-R network, and a monitoring system (referred to as "on-board ATP air interface monitoring system") for monitoring I_{GSM}-_{R} and Um interfaces of on-board CTCS-3 train control devices. The various monitoring and detection means have different positions, roles and equipment standards.

Although many monitoring and detection methods are provided for the on-board side, the communication network side and the RBC side, the train-ground data transmission of the CTCS-3 involves many network elements and various complicated interfaces. The existing monitoring and detection means cannot cover the complete train-ground transmission.

### 2. Current analysis of interface monitoring data

Basic monitoring data can be collected through the various monitoring and detection methods and the three-interface monitoring system of the GSM-R network can conduct a preliminary analysis on faults, but the fault analysis has a low intelligent degree and needs a large number of human efforts.

At present, the interface monitoring system can provide some auxiliary means, for example, notification and prompts for simple CTCS-3 radio timeout faults such as a single mobile terminal (MT) across an RBC handover area, a chaotic switching order, and a switching failure. However, most other faults are still analyzed mainly through manual data monitoring and analysis, alarms and prompts by the GSM-R network manager, and a comparison with typical fault cases. Accurate and effective analysis cannot be performed on some non-typical cases and special faults.

Meanwhile, maintenance personnel in the electrical service and communication sections in various road bureaus have no sufficient experience on network testing and optimization. The maintenance personnel have different technical levels, and various types of monitoring and detection data are not linked and shared, which leads to inconsistent analysis results between different road bureaus, between different personnel in the same road bureau, and between different time periods for a similar CTCS-3 radio timeout fault. Therefore, it is difficult to establish an effective case database and provide a unified solution and analysis report for the same fault in future.

### 3. Current radio timeout fault and processing mechanism

Generally, railway authorities perform regular statistical analyses on main reasons for the radio communication timeout of the CTCS-3 on-board ATP devices and determine regulation measures and plans for the next stage.

### SUMMARY

In terms of the preceding problems in the existing art, the present invention provides a train-ground integrated analysis platform.

The platform includes a data acquisition subsystem, a data integration subsystem, an integrated analysis subsystem and an integrated exhibition subsystem.

The data acquisition subsystem includes an interface unit for an on-board ground interface machine, an interface gateway of an air interface monitoring system, an interface gateway for a C3 radio interface monitoring system and an interface unit for an RBC maintenance terminal.

The data integration subsystem is disposed on an upper layer of the data acquisition subsystem and includes an on-board ATP equipment (AE) and judicial recorder unit (JRU) data parsing unit, an I_{GSM}-_{R} interface monitoring data parsing unit, a Um interface monitoring data parsing unit, an Abis interface monitoring data parsing unit, an A interface monitoring data parsing unit, a PRI interface monitoring data parsing unit and an RBC monitoring data parsing unit.

The integrated analysis subsystem is disposed on an upper layer of the data integration subsystem and performs an integrated analysis on data in all data parsing units in the data integration subsystem.

The integrated exhibition subsystem is disposed on an upper layer of the integrated analysis subsystem, receives an integrated analysis result and a list of maintenance suggestions sent by the integrated analysis subsystem and visually displays the integrated analysis result.

Furthermore, the interface unit for the on-board ground interface machine is configured to acquire on-board AE data and JRU data from an on-board ATP.

The interface gateway of the air interface monitoring system is configured to acquire I_{GSM}-_{R} interface monitoring data and Um interface monitoring data.

The interface gateway for the C3 radio interface monitoring system is configured to acquire Abis interface monitoring data, A interface monitoring data and PRI interface monitoring data.

The interface unit for the RBC maintenance terminal is configured to acquire RBC monitoring data.

Furthermore, the on-board AE and JRU data parsing unit is configured to preprocess and store on-board AE data and JRU data acquired by the data acquisition subsystem.

The I_{GSM-R} interface monitoring data parsing unit is configured to preprocess and store I_{GSM}-_{R} interface monitoring data acquired by the data acquisition subsystem.

The Um interface monitoring data parsing unit is configured to preprocess and store Um interface monitoring data acquired by the data acquisition subsystem.

The Abis interface monitoring data parsing unit is configured to preprocess and store Abis interface monitoring data acquired by the data acquisition subsystem.

The A interface monitoring data parsing unit is configured to preprocess and store A interface monitoring data acquired by the data acquisition subsystem.

The PRI interface monitoring data parsing unit is configured to preprocess and store PRI interface monitoring data acquired by the data acquisition subsystem.

The RBC monitoring data parsing unit is configured to preprocess and store RBC monitoring data acquired by the data acquisition subsystem.

Furthermore, the on-board AE and JRU data parsing unit is configured to acquire event information data such as a train number, an engine number, a working state of an on-board device and a driver's operation on the on-board device, parse the acquired event information data into a message packet that can be transmitted inside the train-ground integrated analysis platform, and transmit the message packet to the integrate analysis subsystem.

The I_{GSM}-_{R} interface monitoring data parsing unit is configured to identify, in the I_{GSM}-_{R} interface monitoring data, information data such as the engine number, the train number, a kilometer sign, a message direction and a message time, combine the acquired information data into a message packet that can be transmitted inside the train-ground integrated analysis platform, and transmit the message packet to the integrated analysis subsystem.

The Um interface monitoring data parsing unit is configured to identify, in the Um interface monitoring data, information data such as the engine number, the train number, the kilometer sign, the message time and a protocol type, combine the acquired information data into a message packet that can be transmitted inside the train-ground integrated analysis platform, and transmit the message packet to the integrated analysis subsystem.

The Abis interface monitoring data parsing unit is configured to identify, in the Abis interface monitoring data, information data such as the engine number, the train number, the kilometer sign, a message type, a keyword, the message direction, uplink and downlink level values and a communication quality, combine the acquired information data into a message packet that can be transmitted inside the train-ground integrated analysis platform, and transmit the message packet to the integrated analysis subsystem.

The A interface monitoring data parsing unit is configured to identify, in the A interface monitoring data, information data such as the engine number, the train number, the message time, the message type, the message direction, a message reason and the kilometer sign, combine the acquired information data into a message packet that can be transmitted inside the train-ground integrated analysis platform, and transmit the message packet to the integrated analysis subsystem.

The PRI interface monitoring data parsing unit is configured to identify, in the PRI interface monitoring data, information data such as the engine number, the train number, the message time, the message type, the message direction and the message reason, combine the information data into a message packet that can be transmitted inside the train-ground integrated analysis platform, and transmit the message packet to the integrated analysis subsystem.

The RBC monitoring data parsing unit is configured to acquire, in the RBC monitoring data, information data such as a working state of an RBC, a connection state between the RBC and another device, an RBC fault alarm and a train state in the RBC, parse the acquired information data into a message packet that can be transmitted inside the train-ground integrated analysis platform, and transmit the message packet to the integrated analysis subsystem.

Furthermore, the integrated analysis subsystem is configured to identify abnormal data and locate an abnormal link.

Furthermore, the integrated analysis subsystem is configured to determine a fault reason and provide a maintenance suggestion by analyzing fault features described below.

A first fault feature includes a poor downlink receiving quality of a Um interface and a poor downlink or uplink receiving quality of an Abis interface, or a same problem happening multiple times to multiple trains at a same position; the fault reason is determined as radio interference; and the maintenance suggestion is to perform an electromagnetic environment test on site and find and locate an interference source, or to clear an interference frequency.

A second fault feature includes extremely poor communication qualities of uplink and downlink trains in a section covered by a repeater, which eventually leads to dropped calls; the fault reason is determined as multipath interference; and the maintenance suggestion is to reduce self-interference between master and slave signals.

A third fault feature includes frequent switching failures on the boundary between road bureaus, or the same problem happening multiple times to multiple trains at the same position; the fault reason is determined as a radio network parameter setting problem; and the maintenance suggestion is to modify a source mobile switching center (MSC) configuration and add an MSC of a target cell to a source MSC list.

A fourth fault feature includes frequent across-base transceiver station (BSC) switching failures in a BSC handover area, or the same problem happening multiple times to multiple trains at the same position; the fault reason is determined as a BSC device fault; and the maintenance suggestion is to contact a device manufacturer to resolve the device fault.

A fifth fault feature includes continuous downlink high-level data link control (HDLC) frame errors of an I_{GMP-R} interface and continuous uplink HDLC frame errors of a PRI interface; the fault reason is determined as a BSC clock board fault; and the maintenance suggestion is to process according to a prompt of an alarm of a BSC network manager or to find the fault board and replace it.

A sixth fault feature includes bidirectional BSC delinking or an alarm of a BSC service board; the fault reason is determined as a BSC service board fault; and the maintenance suggestion is to process according to a prompt of an alarm of the BSC network manager or to find the fault board and replace it.

A seventh fault feature is that uplink of the PRI interface only includes HDLC frames of less than 20 bytes, and downlink of the I_{GSM}-_{R} interface only includes HDLC frames of less than 20 bytes, or a same phenomenon happening to multiple train bodies; the fault reason is determined as a transcoder/rate adapter unit (TRAU) software fault; and the maintenance suggestion is to contact a device manufacturer to resolve the device fault.

An eighth fault feature includes bidirectional BSC delinking due to a Resource Unavailable/Temporary failure; the fault reason is determined as a BTS hardware fault or antenna feeder fault; and the maintenance suggestion is to process according to a prompt of an alarm of the BSC network manager;

A ninth fault feature includes no HDLC frame transmitted from vehicle to ground via Abis, A and PRI interfaces or no HDLC frame transmitted from ground to vehicle via the Abis, Um and I_{GSM}-_{R} interfaces in a certain cell after switching, which eventually leads to a radio timeout; the fault reason is determined as an Abis interface timeslot fault; and the maintenance suggestion is to contact a device manufacturer to resolve the device fault.

A tenth fault feature includes the Abis interface does not receive data of a fault base station in a certain cell after switching; the fault reason is determined as BTS dormancy; and the maintenance suggestion is to contact a device manufacturer to resolve the device fault.

An eleventh fault feature includes continuous MT switching failures and MT delinking for a failed switching back to a source cell after the continuous switching failures; the fault reason is determined as a MT switching failure due to a BTS fault; and the maintenance suggestion is to contact a device manufacturer to resolve the device fault.

A twelfth fault feature is that a frame of an information packet sent by an RBC to an on-board ATP is lost; the fault reason is determined as a BTS base station clock deviation; and the maintenance suggestion is to adjust a base station clock deviation parameter and improve a clock deviation protection capability.

A thirteenth fault feature include a radio timeout due to bidirectional MSC delinking, a RELEASE message with a reason value of E2 9F in an MSC->BSC direction existing in monitoring data, or a DISCONNECT message with a reason value of 82 90 in an MSC->RBC direction existing in the monitoring data; the fault reason is determined as MSC delinking; and the maintenance suggestion is to contact a device manufacturer to resolve the device fault.

A fourteenth fault feature includes the radio timeout due to the bidirectional MSC delinking, or MSC delinking with a BSC for the Resource Unavailable/Temporary failure according to the monitoring data; the fault reason is an MSC board fault; and the maintenance suggestion is to check an alarm of an MSC network manager and process according to a prompt of the alarm, or to find the fault board and replace it.

A fifteenth fault feature includes the radio timeout due to the bidirectional MSC delinking, or the MSC delinking with the BSC for the Resource Unavailable/Temporary failure according to the monitoring data; the fault reason is the MSC board fault; and the maintenance suggestion is process according to the prompt of the alarm of the MSC network manager.

A sixteenth fault feature includes a data transmission timeout; the fault reason is determined as an interworking function (IWF) software fault; and the maintenance suggestion is to contact a device manufacturer to resolve the device fault.

A seventeenth fault feature includes cross-MSC switching failures of multiple train bodies; the fault reason is determines as an E interface transmission fault; and the maintenance suggestion is to process according to a prompt of a network manager.

An eighteenth fault feature includes the bidirectional BSC delinking; the fault reason is determines as an A interface transmission fault; and the maintenance suggestion is to process according to the prompt of the network manager.

A nineteenth fault feature includes the bidirectional BSC delinking; the fault reason is determines as an Ater interface transmission fault; and the maintenance suggestion is to process according to the prompt of the network manager.

A twentieth fault feature includes MSC delinking with the RBC; the fault reason is determines as a PRI interface transmission fault; and the maintenance suggestion is to process according to the prompt of the network manager.

A twenty-first fault feature is that the MT fails to register online and a receiving level is normal; the fault reason is determined as an MT fault; and the maintenance suggestion is to modify a GSM-R network configuration parameter in an MT module from 0 to 3.

A twenty-second fault feature includes a SIM card reading and writing error, a SIM card detection failure, the I_{GSM}-_{R} interface observing a start message outputted by a restarted MT, or the Abis or A interface monitoring that the MT triggers a detach message and sends an attach message; the fault reason is determined to be that the SIM card of the MT module is loosened; and the maintenance suggestion is to replace in time a card slot and the SIM card of the MT module.

A twenty-third fault feature includes a normal uplink level and quality and a consistent level-7 downlink level in a measurement report; the fault reason is determined as an MT antenna feeder abnormality or external interference on an MT antenna feeder; and the maintenance suggestion is to inspect and maintain an antenna feeder of the MT module, or if an antenna feeder system of an on-board MT module is normal, the fault is related to the external interference, find and analyze an interference source in conjunction with a vehicle side.

A twenty-fourth fault feature includes that uplink and downlink receiving levels of the MT module are lower than a receiving level of another MT module; the fault reason is determined as an MT module performance or antenna feeder connection abnormality; and the maintenance suggestion is to confirm whether the antenna feeder of the MT module is connected normally, tighten the antenna feeder, and replace with a flexible cable if necessary.

A twenty-fifth fault feature includes an ATP radio connection timeout and a train control level is degraded from C3 to C2 and fails to go back from C2 to C3; the fault reason is determined as a safe transmission unit-vehicle (STU-V) software problem; and the maintenance suggestion is to tighten a connection line of an STU-V device or update STU-V software.

A twenty-sixth fault feature includes a radio timeout due to an ATP restart; the fault reason is determined as the ATP restart; and the maintenance suggestion is to standardize a driver's operation, require the driver to strictly close a bridge according to a process, and turn off a power source of an on-board device.

A twenty-seventh fault feature is that different train bodies fail to communicate with a faulty RBC within a same time period; the fault reason is determined as an integrated services digital network (ISDN) server abnormality; and the maintenance suggestion is to keep track of a fault condition and find out an inducer of the fault.

A twenty-eighth fault feature includes a communication interruption between two adjacent RBCs in a handover process which leads to the radio timeout and degradation to C2; the fault reason is determined as an RBC-RBC communication timeout in the handover process; and the maintenance suggestion is to modify an internal configuration parameter of the RBC.

A twenty-ninth fault feature includes a radio timeout due to abnormal RBC delinking; the fault reason is determined as an internal fault of the RBC; and the maintenance suggestion is to keep track of a fault condition and find out an inducer of the fault.

A thirtieth fault feature includes that the on-board device fails to receive any application data from the RBC within a timeout period, or normal uplink and downlink receiving qualities in the measurement report; the fault reason is determined as an RBC application layer abnormality; and the maintenance suggestion is to keep track of a fault condition and find out an inducer of the fault.

A thirty-first fault feature includes a communication interruption between the RBC and an interlocking device, or degradation of all trains within an interlocking range; the fault reason is determined as the communication interruption between the RBC and the interlocking device; and the maintenance suggestion is to check a safe data network connection between the RBC and the interlocking device.

Furthermore, the integrated analysis subsystem is configured to aggregate messages parsed by all the data parsing units in the data integration subsystem, identify an engine number, a train number and a message time, and regard data of a same train within a same time period as a logical state of entire train-ground communications within the same time period.

Furthermore, the data acquisition subsystem is disposed in a communication front-end processor.

The data integrated subsystem is disposed in a central computer system.

The integrated analysis subsystem is disposed in the central computer system.

The integrated exhibition subsystem is disposed in an integrated analysis platform.

Furthermore, the interface unit for the on-board ground interface machine and the interface gateway of the air interface monitoring system are disposed in a communication front-end processor of an on-board monitoring data center.

The interface unit for the RBC maintenance terminal in the data acquisition subsystem is disposed in a communication front-end processor of an RBC computer room.

The interface gateway for the C3 radio interface monitoring system in the data acquisition subsystem is disposed in a communication front-end processor of a GSM-R core network computer room.

Furthermore, the communication front-end processor of the on-board monitoring data center, the communication front-end processor of the RBC computer room and the communication front-end processor of the GSM-R core network computer room implement data connections with the central computer system through a private transmission network.

The technical solutions in the present invention can perform an integrated diagnosis on a train-ground communication state, identify a train-ground communication abnormality, and locate fault device and link, improving availability of a C3 system. Additional features and advantages of the preset invention will be set forth in the description which follows, and in part will be apparent from the description, or may be understood by implementing the present invention. The objects and other advantages of the present invention may be implemented and obtained through structures set forth in the description, claims and drawings.

### BRIEF DESCRIPTION OF DRAWINGS

To illustrate the technical solutions in the embodiments of the present invention or the technical solutions in the existing art more clearly, drawings used in the description of the embodiments or the existing art will be briefly described below. Apparently, the drawings described below illustrate part of the embodiments of the present invention, and those skilled in the art may obtain other drawings based on the drawings described below on the premise that no creative work is done.
FIG. 1 is a logical block diagram of a train-ground integrated analysis platform according to an embodiment of the present invention; and
FIG. 2 is a physical structural diagram of a train-ground integrated analysis platform according to an embodiment of the present invention.

### DETAILED DESCRIPTION

To illustrate the objects, technical solutions and advantages of embodiments of the present invention more clearly, the technical solutions in the embodiments of the present invention will be described clearly and completely in conjunction with drawings in the embodiments of the present invention. Apparently, the described embodiments are part, not all, of embodiments of the present invention. Based on the embodiments of the present invention, all other embodiments obtained by those skilled in the art without creative work are within the scope of the present invention.

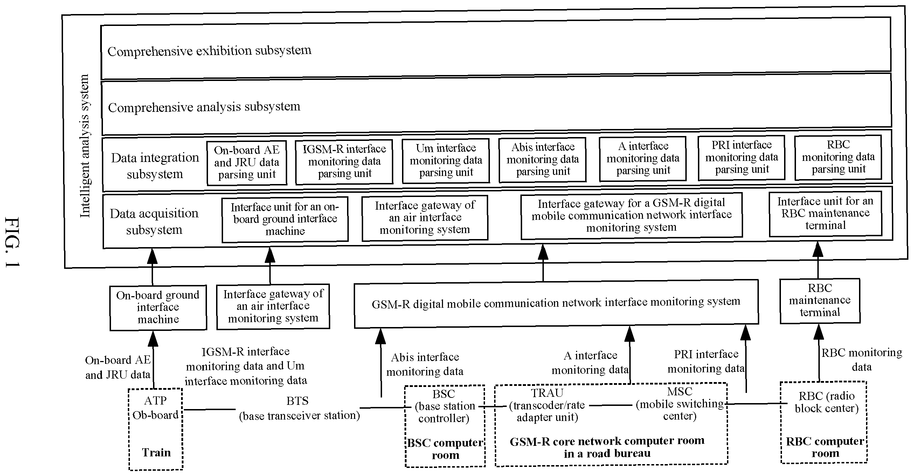

FIG. 1 is a block diagram of a train-ground integrated analysis platform according to an embodiment of the present invention. As shown in FIG. 1, the train-ground integrated analysis platform in an embodiment of the present invention adopts a hierarchical configuration, and includes a data acquisition subsystem, a data integration subsystem, an integrated analysis subsystem and an integrated exhibition subsystem from bottom to top. This design manner improves flexibility. Each layer can separately implement its function and will not change with a change of another layer as long as interfaces between layers remain unchanged, and each layer can adopt an appropriate data processing manner without affecting another layer. This design manner is more advantageous for standardization in a train-ground integrated analysis technology.

The data acquisition subsystem implements a data acquisition function, and includes an interface unit for an on-board ground interface machine, an interface gateway of an air interface monitoring system, an interface gateway for a C3 radio interface monitoring system (such as an interface gateway of a GSM-R digital mobile communication network interface monitoring system shown in FIG. 1), an interface unit for an RBC maintenance terminal and the like. The interface unit for the on-board ground interface machine acquires data of on-board ATP equipment (AE) and data of a judicial recorder unit (JRU) from the on-board ground interface machine. The interface gateway of the air interface monitoring system acquires I_{GSM}-_{R} interface monitoring data and Um interface monitoring data from the interface gateway of the air interface monitoring system. The interface gateway for the C3 radio interface monitoring system acquires Abis interface monitoring data, A interface monitoring data and PRI interface monitoring data from the C3 radio interface monitoring system. The interface unit for the RBC maintenance terminal acquires RBC monitoring data from the RBC maintenance terminal.

The data integration subsystem includes an on-board AE and JRU data parsing unit, an I_{GSM}-_{R} interface monitoring data parsing unit, a Um interface monitoring data parsing unit, an Abis interface monitoring data parsing unit, an A interface monitoring data parsing unit, a PRI interface monitoring data parsing unit and an RBC monitoring data parsing unit.

The on-board AE and JRU data parsing unit preprocesses and stores the on-board AE and JRU data acquired by the data acquisition subsystem. Exemplarily, the on-board AE and JRU data parsing unit acquires event information data such as a train number, an engine number, a working state of an on-board device and a driver's operation on the on-board device, parses the acquired event information data into a message packet that can be transmitted inside the train-ground integrated analysis platform, and transmits the message packet to the integrate analysis subsystem.

The I_{GSM}-_{R} interface monitoring data parsing unit preprocesses and stores the I_{GSM-R} interface monitoring data acquired by the data acquisition subsystem. Exemplarily, the I_{GSM}-_{R} interface monitoring data parsing unit identifies and combines the engine number, the train number, a kilometer sign, a message direction, a message time and the like in the I_{GSM}-_{R} interface monitoring data into a message packet that can be transmitted inside the train-ground integrated analysis platform, and transmits the message packet to the integrated analysis subsystem.

The Um interface monitoring data parsing unit preprocesses and stores the Um interface monitoring data acquired by the data acquisition subsystem. Exemplarily, the Um interface monitoring data parsing unit identifies and combines the engine number, the train number, the kilometer sign, the message time, a protocol type and the like in the Um interface monitoring data into a message packet that can be transmitted inside the train-ground integrated analysis platform, and transmits the message packet to the integrated analysis subsystem.

The Abis interface monitoring data parsing unit preprocesses and stores the Abis interface monitoring data acquired by the data acquisition subsystem. Exemplarily, the Abis interface monitoring data parsing unit identifies and combines the engine number, the train number, the kilometer sign, a message type, a keyword, the message direction, uplink and downlink level values, a communication quality and the like in the Abis interface monitoring data into a message packet that can be transmitted inside the train-ground integrated analysis platform, and transmits the message packet to the integrated analysis subsystem.

The A interface monitoring data parsing unit preprocesses and stores the A interface monitoring data acquired by the data acquisition subsystem. Exemplarily, the A interface monitoring data parsing unit identifies and combines the engine number, the train number, the message time, the message type, the message direction, a message reason, the kilometer sign and the like in the A interface monitoring data into a message packet that can be transmitted inside the train-ground integrated analysis platform, and transmits the message packet to the integrated analysis subsystem.

The PRI interface monitoring data parsing unit preprocesses and stores the PRI interface monitoring data acquired by the data acquisition subsystem. Exemplarily, the PRI interface monitoring data parsing unit identifies and combines the engine number, the train number, the message time, the message type, the message direction, the message reason and the like in the PRI interface monitoring data into a message packet that can be transmitted inside the train-ground integrated analysis platform, and transmits the message packet to the integrated analysis subsystem.

The RBC monitoring data parsing unit preprocesses and stores the RBC monitoring data acquired by the data acquisition subsystem. Exemplarily, the RBC monitoring data parsing unit acquires data including a working state of an RBC, a connection state between the RBC and another device, an RBC fault alarm, a train state in the RBC and the like in the RBC monitoring data, parses the acquired data into a message packet that can be transmitted inside the train-ground integrated analysis platform, and transmits the message packet to the integrated analysis subsystem.

In the data integration subsystem, different data parsing units are divided for acquiring different monitoring data, which implements independent processing and storage of different monitoring data, facilitates analyses of various monitoring data, and improves query efficiency and query accuracy of different monitoring data. Such a configuration improves monitoring and analysis capabilities of the platform and provides a more accurate and timely analysis.

The integrated analysis subsystem performs an integrated analysis on data in all the data parsing units in the data integration subsystem.

The integrated analysis subsystem aggregates messages parsed by all the data parsing units in the data integration subsystem, identifies the engine number, the train number and the message time, and takes data acquired from the same train within the same time period as a logical state of the entire train-ground communications within the same time period. In a logical process, the ATP initiates a request to a network and the RBC provides a feedback for the request to form a closed loop. If the closed loop cannot be formed, an abnormal communication link exists. For a complete logical process, whether a communication process is normal is determined according to a logical state of each node. In case of an abnormal communication process, abnormal data is obtained and an abnormal link is analyzed according to communication logics.

Through a forward check on a normal connection, delinking and switching process of C3 radio communications and supervision of key signaling response logics, it may be determined whether the logical process achieves the closed loop and whether an abnormality occurs. In case of the abnormality, the abnormal link may be located, and a fault reason may be determined by checking whether key features are satisfied. In the embodiment of the present invention, the integrated analysis subsystem may analyze the fault reason and the abnormal link through fault features and provide maintenance suggestions based on the following list:

| Fault Reason | Fault Feature | Maintenance Suggestion |
|---|---|---|
| Radio interference | • A poor downlink receiving quality of a Um interface and a poor downlink or uplink receiving quality of an Abis interface. | • Perform an electromagnetic environment test on site and find and locate an interference source. |
| | • The same problem happening multiple times to multiple trains at the same position. | • Clear an interference frequency. |
| Multipath interference | • Extremely poor communication qualities of uplink and downlink trains in a section covered by a repeater, which eventually leads to dropped calls. | • Reduce self-interference between master and slave signals. |
| Radio network parameter setting problem | • Frequent switching failures on the boundary between road bureaus. | Modify a source MSC configuration and add an MSC of a target cell to a source MSC list. |
| | • The same problem happening multiple times to multiple trains at the same position. | |
| BSC device fault | • Frequent across-BSC switching failures in a BSC handover area. | • Contact a device manufacturer to resolve the device fault. |
| | • The same problem happening multiple times to multiple trains at the same position. | |
| BSC clock board fault | • Continuous downlink HDLC frame errors of an I_{GMP-R} interface; and continuous uplink HDLC frame errors of a PRI interface. | • Process according to a prompt of an alarm of a BSC network manager. |
| | | • Find the fault board and replace it. |
| BSC service board fault | • Bidirectional BSC delinking. | • Process according to a prompt of an alarm of the BSC network manager. |
| | • An alarm of a BSC service board. | |
| Transcoder/rate adapter unit (TRAU) software fault | • Uplink of the PRI interface only includes HDLC frames of less than 20 bytes. | • Find the fault board and replace it. |
| | • Downlink of the I_{GSM-R} interface only includes HDLC frames of less than 20 bytes. | • Contact a device manufacturer to resolve the device fault. |
| | • The same phenomenon happening to multiple train bodies. | |
| BTS hardware fault or antenna feeder fault | • bidirectional BSC delinking due to a Resource Unavailable/Temporary failure. | • Process according to a prompt of an alarm of the BSC network manager. |
| Abis interface timeslot fault | • No HDLC frame transmitted from train to ground via the Abis, A and PRI interfaces or no HDLC frame transmitted from ground to train via the Abis, Um and I_{GSM}-_{R} interfaces in a certain cell after switching, which eventually leads to a radio timeout. | • Contact a device manufacturer to resolve the device fault. |
| BTS dormancy | • The Abis interface fails to receive data of a fault base station in a certain cell after the switching. | Contact a device manufacturer to resolve the device fault. |
| MT switching failure due to a BTS fault | • Continuous switching failures of a MT, and MT delinking since the MT cannot go back to a source cell after the continuous switching failures. | • Contact a device manufacturer to resolve the device fault. |
| BTS base station clock deviation | • A frame in an information packet sent by the RBC to the on-board ATP is lost. | Adjust a base station clock deviation parameter and improve a clock deviation protection capability. |
| MSC delinking | • A radio timeout due to bidirectional MSC delinking. | • Contact a device manufacturer to resolve the device fault. |
| | • A RELEASE message with a reason value of E2 9F in an MSC->BSC direction existing in monitoring data. | |
| | • A DISCONNECT message with a reason value of 82 90 in an MSC->RBC direction existing in the monitoring data. | |
| MSC board fault | • The radio timeout due to the bidirectional MSC delinking. | • Check an alarm of an MSC network manager and process according to a prompt of the alarm |
| | • MSC delinking with a BSC due to the Resource Unavailable/Temporary failure according to the monitoring data. | |
| | | • Find the fault board and replace a fault board. |
| IWF module fault | • The radio timeout due to the bidirectional MSC delinking. | Process according to a prompt of an alarm of the MSC network manager. |
| | • MSC delinking with the BSC due to the Resource Unavailable/Temporary failure according to the monitoring data. | |
| Interworking function (IWF) software fault | • A data transmission timeout. | • Contact a device manufacturer to resolve the device fault. |
| E interface transmission fault | • Cross-MSC switching failures of multiple train bodies. | • Process according to a prompt of a network manager. |
| A interface transmission fault | • Bidirectional BSC delinking | • Process according to the prompt of the network manager. |
| Ater interface transmission fault | • Bidirectional BSC delinking | • Process according to the prompt of the network manager. |
| PRI interface transmission fault | • MSC delinking with the RBC | • Process according to the prompt of the network manager. |
| MT Not initiating a call | • Single MT sunning all the time | • Keep track of a fault condition and find out an inducer of the fault. |
| MT fault | • A continuous failure of the MT to register online and a normal receiving level. | • A GSM-R network configuration parameter in an MT module is modified from 0 to 3. |
| loose SIM card of the MT module | • A SIM card reading and writing error. | • Replace in time a card slot and the SIM card of the MT module. |
| | • Fail to detect a SIM card. | |
| | • The I_{GSM-R} interface observes a start message outputted by the MT after being restarted. | |
| | • The Abis or A interface monitors that the MT triggers a detach message and sends an attach message. | |
| MT antenna feeder abnormality or external interference on an MT antenna feeder | • A measurement report indicating uplink level and quality are normal and a downlink level is of level 7 for a period of time. | • Inspect and maintain an antenna feeder of the MT module. |
| | | • If an antenna feeder system of an on-board MT module is normal, the fault is related to the external interference, find and analyze an interference source in conjunction with a vehicle side. |
| MT module performance or antenna feeder connection abnormality | • Uplink and downlink receiving levels of the MT module are lower than a receiving level of another MT module. | • Check whether the antenna feeder of the MT module is connected correctly, tighten the antenna feeder, and replace with a flexible cable if necessary. |
| Safe transmission unit-vehicle (STU-V) software problem | • An ATP radio connection timeout occurs, the train control level is degraded from C3 to C2 and fails to go back from C2 to C3. | • Tighten a connection line of an STU-V device. |
| | | • Update STU-V software. |
| Low STU-V version | • The ATP radio connection timeout occurs, the train control level is degraded from C3 to C2 and fails to go back from C2 to C3. | • Upgrade to a new platform. |
| ATP restart | • A radio timeout due to the ATP restart. | • Standardize a driver's operation, require the driver to strictly close a bridge according to a process, and turn off a power source of the on-board device. |
| ISDN server abnormality | • Different train bodies fail to communicate with a faulty RBC within a same time period. | • Keep track of a fault condition and find out an inducer of the fault. |
| RBC-RBC communication timeout in a handover process | • A communication interruption between two adjacent RBCs in the handover process which leads to the radio timeout and degradation to C2. | • Modify an internal configuration parameter of the RBC. |
| Internal fault of the RBC | A radio timeout due to abnormal RBC delinking. | • Keep track of a fault condition and find out an inducer of the fault. |
| RBC application layer abnormality | • The on-board device fails to receive any application data from the RBC within a timeout period. | • Keep track of a fault condition and find out an inducer of the fault. |
| | • Normal uplink and downlink receiving qualities in the measurement report. | |
| Communication interruption between the RBC and an interlocking device | • The communication interruption between the RBC and the interlocking device. | • Check a safe data network connection between the RBC and the interlocking device. |
| | • All trains within an interlocking range are degraded. | |

In a data analysis process, a decision tree analysis method is adopted to adjust a tree structure and a decision point position, and predict a fault model based on a known radio communication fault probability. Due to a large volume of monitoring data, the decision tree analysis method may classify and select all the monitoring data to improve a data processing rate.

A fuzzy identification technology is adopted to associate uncertain data and transitional data among the large volume of monitoring data with previous records and experience to implement fuzzy integrated judgement. Data parameters are described in more detail with the fuzzy identification technology in the present invention, overcoming a disadvantage in the existing art that the data parameters are simply divided according to a threshold into two classes: "superiority" and "inferiority". Therefore, despite of a large volume of complex data in practice, various parameters may be qualitatively taken as judgement standards.

The integrated analysis subsystem not only identifies a single train or a single time period, but also performs a horizontal comparison for the same train at the same time and the same geographical position to explore whether the same problem happens multiple times to multiple trains, so as to determine communication interference or a communication device fault.

The integrated analysis subsystem implements an intelligent analysis function, and identifies the abnormal data and locates the abnormal link by use of techniques such as fault mode identification, data mining and big data analyses. After the abnormal data is identified and faults are located, the integrated analysis subsystem may generate a list of maintenance suggestions according to fault conditions.

The integrated exhibition subsystem receives an integrated analysis result and the list of maintenance suggestions sent by the integrated analysis subsystem and visually displays the result. The integrated exhibition subsystem in the present invention may implement a multi-dimensional and multi-form visual and humanized exhibition of the monitoring data and the analysis result, which is convenient for a user to acquire an intelligent analysis result of the integrated analysis subsystem in a timely, accurate and intuitive manner.

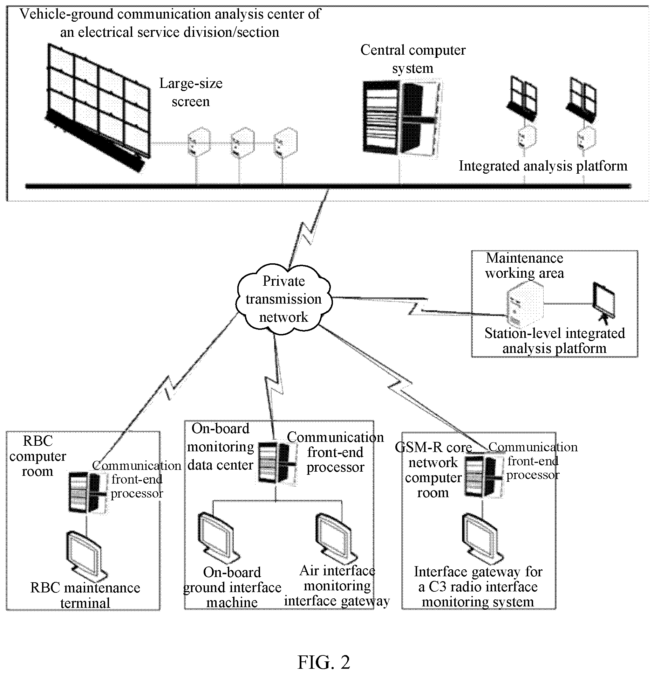

FIG. 2 is a physical structural diagram of a train-ground integrated analysis platform according to an embodiment of the present invention. The train-ground integrated analysis platform includes a central computer system, an integrated analysis platform and communication front-end processors.

To implement an integrated analysis on various monitoring data, the central computer system, the integrated analysis platform and the communication front-end processors are disposed in different nodes of a network system. As shown in FIG. 2, the central computer system and the integrated analysis platform are connected via a communication bus and are disposed in a train-ground communication analysis center of an electrical service division/section. The integrated analysis platform is provided with a display system, for example, a large-size screen, to implement a visual exhibition of an analysis result. A station-level integrated analysis platform is disposed in a maintenance working area. In the embodiment of the present invention, the electrical service division, the electrical service section and the working area have different user management ranges and different focuses of attention. Therefore, a display interface may be customized according to practical conditions. A user interface of the station-level integrated analysis platform may be the same as a user interface of the integrated analysis platform or may be simplified. For example, the user interface merely guides fault maintenance within the working area.

The communication front-end processor disposed in an RBC computer room is connected to an RBC maintenance terminal. The communication front-end processor disposed in an on-board monitoring data center is connected to an on-board ground interface machine and an air interface monitoring interface gateway. The communication front-end processor disposed in a GSM-R core network computer room is connected to an interface gateway for a C3 radio interface monitoring system.

The train-ground communication analysis center of the electrical service division/section, the maintenance working area, the RBC computer room, the on-board monitoring data center and the GSM-R core network computer room implement data connections through a private transmission network. Each communication front-end processor transmits the acquired related data to the station-level integrated analysis platform in the maintenance working area and the central computer system and the integrated analysis platform in the train-ground communication analysis center of the electrical service division/section through the private transmission network.

The central computer system includes a data integration subsystem and an integrated analysis subsystem. The central computer system is disposed in the train-ground communication analysis center of the electrical service division/section, aggregates monitoring data of vehicles, ground and the network, and implements an intelligent analysis on a train-ground communication state. The integrated analysis platform includes an integrated exhibition subsystem. The integrated exhibition subsystem is disposed in the center or the working area according to the practical conditions on site to display the analysis result, and is a user's working interface. The communication front-end processor disposed in the RBC computer room includes an interface unit for the RBC maintenance terminal in a data acquisition subsystem to acquire monitoring data, and implements as an interface with the RBC maintenance terminal. The communication front-end processor disposed in the GSM-R core network computer room includes the interface gateway for the C3 radio interface monitoring system in the data acquisition subsystem to acquire monitoring data, and implements an interface with the C3 radio interface monitoring system. The communication front-end processor disposed in the on-board monitoring data center includes an interface unit for the on-board ground interface machine and an interface gateway of an air interface monitoring system, and implements an interface with the on-board ground interface machine and an interface with the interface gateway of the air interface monitoring system, to acquire monitoring data through an acquisition subsystem in the on-board monitoring data center. In the embodiment of the present invention, the on-board monitoring data center may be integrated with the RBC computer room or the GSM-R core network computer room according to the conditions.

The train-ground integrated analysis platform in the present invention has state supervision, fault alarm, integrated analysis and trend warning functions, and may collect typical fault information and create a fault knowledge database to provide a basis for a further intelligent analysis.

### 1. State supervision

Compared with the C3 radio interface monitoring system, DMS and other monitoring systems, a monitoring range of an intelligent diagnostic system is not limited to some devices or interfaces of the "train" side or is not limited to some devices or interfaces of the "network" side, but covers all the devices or interfaces in the train, ground and network involved in the train-ground communications. The broader monitoring range includes the following devices and interfaces.
(1) The intelligent diagnostic system is connected to the on-board ground interface machine to acquire AE data and JRU data, to more comprehensively monitor and control states of on-board device modules and implement real-time acquisition of on-board data. In the embodiment of the present invention, the AE and JRU from are service nodes at two ends of the train-ground radio communications, the working states and key logs of the ATP can be monitored and recorded based on the AE data and JRU data. Therefore, the states of the on-board device modules can be more comprehensively monitored and controlled. Meanwhile, the real-time acquisition of the on-board data may be implemented through the on-board ground interface machine. That is, the on-board data can be acquired by a ground device in real time and forms a closed loop with data on the ground device; otherwise, the on-board data is recorded on the vehicle. If the analysis platform cannot acquire the on-board data, the analysis platform cannot perform real-time supervision.
(2) The intelligent diagnostic system is connected to the interface gateway of the air interface monitoring system to acquire monitoring data form the I_{GSM-R} interface and monitoring data from the Um interface of a train. The I_{GSM}-_{R} interface is an interface between an ATP radio communication unit and an MT module. The Um interface is a radio interface between an on-board MT and a BTS. Through call records, network signaling, traffic service switching and measurement reports of the I_{GSM-R} interface and the Um interfaces, a receiving level, a receiving quality and an abnormal interruption in an MT running process may be parsed and a running state of the MT may be analyzed and monitored.
(3) The intelligent diagnostic system is connected to the interface gateway for the C3 radio interface monitoring system to acquire monitoring data form the Abis interface, monitoring data form the A interface and monitoring data form the PRI interface during C3 train-ground communications. In the present invention, call records, network signaling, service data switching and measurement reports and the like acquired through Abis, A and PRI interfaces may be parsed to determine a communication abnormality and a service abnormality in a GSM-R network, so that a handover abnormality, radio performance, call duration and the like can be analyzed and counted.
(4) The intelligent diagnostic system is connected to the RBC maintenance terminal to acquire monitoring data of a ground RBC during the C3 train-ground communications. The monitoring data includes a working state of the RBC, an initialization state, a communication state of a handover RBC, a communication state between the RBC and an interlocking device, alarm information, record logs and an ISDN message. An abnormality on the RBC side is monitored through the monitoring data.

The information monitored by the train-ground integrated analysis platform includes: running state of devices and modules (for example, a running state of the on-board ATP acquired by the on-board AE and JRU, and a running state of the RBC acquired by the RBC maintenance terminal), a transmission state of interface service data (for example, a service data loss and error code determined according to the C3 service data obtained from the IGSM-R, Um, Abis, A and PRI interfaces), a transmission state of interface signaling (for example, whether an interval between any two pieces of application layer data of the same link in the same direction is greater than radio timeout time, an active delinking link, and a delinking reason are identified from signaling transmission state data obtained from the I_{GSM-R}, Um, Abis, A and PRI interfaces), and the like.

After obtaining the preceding states, the integrated exhibition subsystem can comprehensively display data transmission paths and device working states during the train-ground communications in various manners such as a network topology diagram, a circuit diagram and a chart for customized use of users at different levels in the electrical service division, the electrical service section and the working area.

### 2. Fault alarm

The train-ground integrated analysis platform in the present invention has the monitoring data of each link of the C3 train-ground communications, and can timely report faults during the train-ground communications. Compared with the C3 radio interface monitoring system, the DMS, other monitoring systems, the on-board ATP, the RBC and other signal devices with a self-diagnosis function, this system performs a more accurate diagnosis on the faults in the C3 train-ground communications. The fault alarm includes the following:
(1) A train-ground communication radio timeout. Exemplarily, the radio timeout may be identified according to ATP log information recorded by the on-board JRU.
(2) A train-ground communication establishment failure. Exemplarily, connection establishment failure signaling is acquired through each radio communication interface to determine the train-ground communication establishment failure.

### 3. Integrated analysis

In the present invention, state information of interfaces and devices are combined for integrated analyze, rather than separately analyzing information from data acquisition pont. An abnormal link is located according to connections between devices, information transmission paths, service interaction logics, etc. Exemplarily, if the abnormal data is monitored at the PRI interface, the corresponding abnormal data is queried at the A interface. If the A interface has the corresponding abnormal data, the abnormal data is queried at the Abis interface. If the abnormal link cannot be located, the corresponding abnormal data is queried at the Um interface. If an Abis interface fault may be located through data at the Um interface, the analysis is completed. The present invention also establishes a decision tree according to a fault probability. Nodes of the tree may not be arranged according to a practical communication process, and key feature points are extracted according to experience. Different data is combined together and distributed at different levels and positions of the decision tree.

A list of maintenance suggestions is generated based on the preceding analysis. Exemplarily, in case of an abnormal RBC restart, the system is prompted to find a reason for the abnormal RBC restart. Exemplarily, in case of the abnormal RBC restart, the system is prompted to find the reason for the abnormal RBC restart. Exemplarily, if a BSC clock board fault is diagnosed, processing suggestions are as follows:
1. Processing is performed according to an alarm prompt of a BSC network manager.
2. A fault board is found and replaced.

The present invention can perform the integrated analysis on a train-ground communication abnormality according to rules such as the connections between devices, the information transmission paths and the service interaction logics by combining the monitoring data of the vehicle, the monitoring data of the network and the monitoring data of the ground, more comprehensively find the abnormal link, more accurately locate the fault reason, and generate the list of maintenance suggestions according to the fault conditions, thereby reducing fault troubleshooting time and fault location time, and preventing system risks.

### The integrated analysis is performed as follows:

### (1) Active delinking link location

An active delinking link in the case of the train-ground communication abnormality is located by combining the monitoring data of links involved in the train-ground communications, and the active delinking link is deeply analyzed to determine an abnormality reason, including reasons described below.
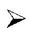 The RBC performs the active delinking, that is, the RBC actively disconnects. As shown in FIG. 1, the RBC communicates with an MSC, and the RBC performs the active delinking, that is, the RBC actively delinks with the MSC to disconnect with the MSC.
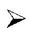 The MSC performs the active delinking. The MSC performs the active linking in the same manner as the RBC. As shown in FIG. 1, the MSC communicates with the BSC and the RBC. Therefore, the MSC performs the active delinking in two directions: delinking with the RBC and delinking with the BSC.
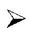 The BSC performs the active delinking. The BSC performs the active delinking in the same manner as the RBC. As shown in FIG. 1, the BSC delinks with a BTS and delinks with the MSC.
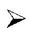 The BTS performs the active delinking. The BTS performs the active delinking in the same manner as the RBC. As shown in FIG. 1, the BSC delinks with the BSC and delinks with the on-board ATP.
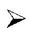 The MT performs the active delinking. The MT performs the active delinking in the same manner as the RBC. As shown in FIG. 1, the MT delinks with the BTS.

### (2) Data consistency check

Exemplarily, a consistency check is performed on network data and service data for each link of the train-ground communication chain. Exemplarily, if a piece of information is transmitted by an upstream interface and is not found at the present interface, the information may be lost. If a service interaction logic that does not comply with upstream information is found at the present interface, an information distortion may occur. Exemplarily, the consistency check is performed on Um interface data and I_{GSM-R} interface data to determine whether a fault is caused by an on-board device abnormality or GSM-R network interference or a GSM-R network abnormality.

Through the consistency check, a link where data is lost and distorted in the transmission process is located and a communication quality of the link is further analyzed to determine the abnormality reason.

### (3) Closed loop analysis of a communication signal

The system in the present invention may implement an analysis in both communications field and electrical service field, evaluate the whole communication process and draw conclusions, and reduce the coordination between the communication department and the electrical service department and reduce manpower costs.

The train-ground communications are performed between the on-board ATP and the ground RBC, and data transmissions are implemented through the on-board MT, the BTS, the BSC and the MSC. A monitoring means is provided between every two adjacent nodes, and the on-board ATP and the ground RBC also have their own running monitoring logs. Through monitoring information, a closed loop is implemented for monitoring the whole train-ground communication process to obtain more comprehensive information and facilitate information fusion and fault location.

Therefore, the present invention can determine the reason for the train-ground communication abnormality through a closed-loop analysis across fields, and solve the problem of a difficulty to locate a fault across fields. The reason for the train-ground communication abnormality includes reasons described below.

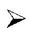 RBC device abnormality

Monitoring information may be obtained by the RBC maintenance terminal. The RBC maintenance terminal monitors and records the working state and log information of the RBC, and acquires abnormal information. The abnormality includes an application layer session timeout, an interruption of communications with an interlocking device, a restart, being uninitialized, a logout failure and an ISDN server abnormality.

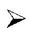 On-board device abnormality

A working state and log information of an on-board device are acquired and recorded by the on-board AE and JRU. A running state of the MT may be analyzed and monitored through the I_{GSM}-_{R} interface and the Um interface. Data associated with the on-board device abnormality such as single MT running, a card slot problem or a SIM card problem of the MT and an application layer session timeout may be acquired through the preceding monitoring and analysis.

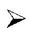 GSM-R network interference

The Um interface and the Abis interface can monitor a communication quality and a communication level. A communication quality or a communication level beyond a critical value is determined to be abnormal. Switching state and reason may be monitored by the Um interface, the Abis interface and the A interface. The abnormality may be determined according to reason values and upper and lower logics interactions. The abnormality includes a communication quality abnormality, a communication level abnormality and a switching reason abnormality. □

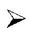 GSM-R network device abnormality

Feature information is extracted from signaling and service information of the Um interface, the Abis interface, the A interface and the PRI interface according to the information transmission paths and interaction logics to determine the fault or abnormal communication device. A common feature of abnormal network devices is that a timeout fault happens to multiple vehicles. A device fault or abnormality includes an MSC/IWF fault, a BSC/TRAU fault, a BTS fault, a transmission device fault and a data loopback of the Abis interface of the base station.

### 4. Trend warning

The intelligent diagnosis system can monitor various communication quality characteristics from data of the vehicle, the network and the ground. The communication quality characteristics include, for example, an uplink receiving quality, a downlink receiving quality, an uplink receiving level and a downlink receiving level. An abnormal change refers to a worse trend. The communication quality variation characteristics are combined with statistical indicators to warn an abnormal trend change. Meanwhile, the system can count a continuous fault rate of the vehicle or the base station from the perspective of the vehicle or the base station, and provide warnings and suggestions for the maintenance of the on-board device or a base station device. The system can also take the vehicle, a cell of the base station or the RBC as a unit, establish a multi-dimensional model in time, position, climate and other dimensions by use of a big data analysis technology, and count device fault type and probability in each dimension, to further guide the maintenance of train-ground communication devices.

The trend warning function can help users to identify hidden faults as early as possible, and provide timely warnings when a device is likely to fail, prevent faults and decreasing the fault probability.

### (5) Fault library information collection

The train-ground integrated analysis platform allows the analysts to manually set typical faults and create a fault knowledge database using typical faults to provide the basis for the further intelligent analysis. A fault model can be inputted into the fault knowledge database in a list form through an operation interface of the integrated analysis platform, the list is stored in the database, and an intelligent diagnosis algorithm is upgraded according to the typical faults stored in the database during a system upgrade.

The typical faults include diagnosis logics embodied in an algorithm structure. The diagnosis logics provide a result for maintenance personnel's reference. If the maintenance personnel do not accept the result, the maintenance personnel further perform manual analyses. Alternatively, during long-term use, if the maintenance personnel find a diagnosis defect of the system that the system fails to diagnose a high-frequency fault, the maintenance personnel can input a typical feature and a fault reason for the high-frequency fault on the operation interface of the integrated analysis platform.

At present, the C3 system of high-speed railways encounters a train-ground communication abnormality frequently. However, facing various monitoring data of the vehicle, the ground and the network, the manual analysis needs a long processing time, and has low integrity and fault location difficulties. Under the requirement for a rapid and accurate analysis of the train-ground communication abnormality, the system combines the I_{GSM}-_{R} interface monitoring data, the Um interface monitoring data, the Abis interface monitoring data, the A-interface monitoring data, the PRI interface monitoring data, and information of the on-board ATP and the RBC in the C3 system in the train-ground communications, performs an intelligent diagnosis on the train-ground communication state, identifies the train-ground communication abnormality, locates fault device and link, and provides maintenance and optimization suggestions.

The intelligent diagnosis system can reduce current manual processing time of the train-ground communication abnormality and improve the availability of the C3 system, and has practical significance for efficient railway transportation and enhanced transportation safety.

Although the present invention has been described in detail with reference to the above-mentioned embodiments, it should be understood by those skilled in the art that the technical solutions described in the above-mentioned embodiments may still be modified, or part of the technical features therein may be equivalently substituted. Such modifications or substitutions do not depart from the spirit and scope in nature of the technical solutions in the embodiments of the present invention.

## Claims

1. A train-ground integrated analysis platform, comprising: a data acquisition subsystem, a data integration subsystem, an integrated analysis subsystem and an integrated exhibition subsystem;
wherein the data acquisition subsystem comprises: an interface unit for an on-board ground interface machine, an interface gateway of an air interface monitoring system, an interface gateway for a Chinese train control system of level 3, C3, radio interface monitoring system, and an interface unit for a radio block center, RBC, maintenance terminal;
the data integration subsystem is disposed on an upper layer of the data acquisition subsystem and comprises: an on-board Automatic Train Protection, ATP, equipment, AE, and judicial recorder unit, JRU, data parsing unit, an I_{GSM}-_{R} interface monitoring data parsing unit, a Um interface monitoring data parsing unit, an Abis interface monitoring data parsing unit, an A interface monitoring data parsing unit, a primary rate interface, PRI, interface monitoring data parsing unit and an RBC monitoring data parsing unit;
the integrated analysis subsystem is disposed on an upper layer of the data integration subsystem and performs an integrated analysis on data in all data parsing units in the data integration subsystem; and
the integrated exhibition subsystem is disposed on an upper layer of the integrated analysis subsystem, receives an integrated analysis result and a list of maintenance suggestions sent by the integrated analysis subsystem and displays the integrated analysis result.

2. The train-ground integrated analysis platform of claim 1, wherein
the interface unit for the on-board ground interface machine is configured to acquire on-board AE and JRU data from an on-board ATP;
the interface gateway of the air interface monitoring system is configured to acquire I_{GSM}-_{R} interface monitoring data and Um interface monitoring data;
the interface gateway for the C3 radio interface monitoring system is configured to acquire Abis interface monitoring data, A interface monitoring data and PRI interface monitoring data; and
the interface unit for the RBC maintenance terminal is configured to acquire RBC monitoring data.

3. The train-ground integrated analysis platform of claim 1, wherein
the on-board AE and JRU data parsing unit is configured to preprocess and store on-board AE and JRU data acquired by the data acquisition subsystem;
the I_{GSM}-_{R} interface monitoring data parsing unit is configured to preprocess and store I_{GSM}-_{R} interface monitoring data acquired by the data acquisition subsystem;
the Um interface monitoring data parsing unit is configured to preprocess and store Um interface monitoring data acquired by the data acquisition subsystem;
the Abis interface monitoring data parsing unit is configured to preprocess and store Abis interface monitoring data acquired by the data acquisition subsystem;
the A interface monitoring data parsing unit is configured to preprocess and store A interface monitoring data acquired by the data acquisition subsystem;
the PRI interface monitoring data parsing unit is configured to preprocess and store PRI interface monitoring data acquired by the data acquisition subsystem; and
the RBC monitoring data parsing unit is configured to preprocess and store RBC monitoring data acquired by the data acquisition subsystem.

4. The train-ground integrated analysis platform of claim 3, wherein
the on-board AE and JRU data parsing unit is configured to acquire event information data, parse the acquired event information data into a message packet that can be transmitted inside the train-ground integrated analysis platform, and transmit the message packet to the integrate analysis subsystem, wherein the event information data comprises: a train number, an engine number, a working state of an on-board device and a driver's operation on the on-board device;
the I_{GSM}-_{R} interface monitoring data parsing unit is configured to identify information data from the I_{GSM}-_{R} interface monitoring data, combine the acquired information data into a message packet that can be transmitted inside the train-ground integrated analysis platform, and transmit the message packet to the integrated analysis subsystem, wherein the in the information data comprises: the engine number, the train number, a kilometer sign, a message direction and a message time;
the Um interface monitoring data parsing unit is configured to identify information data from the Um interface monitoring data, combine the acquired information data into a message packet that can be transmitted inside the train-ground integrated analysis platform, and transmit the message packet to the integrated analysis subsystem, wherein the information data comprises the engine number, the train number, the kilometer sign, the message time and a protocol type;
the Abis interface monitoring data parsing unit is configured to identify information data from the Abis interface monitoring data, combine the acquired information data into a message packet that can be transmitted inside the train-ground integrated analysis platform, and transmit the message packet to the integrated analysis subsystem, wherein the information data comprises the engine number, the train number, the kilometer sign, a message type, a keyword, the message direction, uplink and downlink level values and a communication quality;
the A interface monitoring data parsing unit is configured to identify information data from the A interface monitoring data, combine the acquired information data into a message packet that can be transmitted inside the train-ground integrated analysis platform, and transmit the message packet to the integrated analysis subsystem, wherein the information data comprises: the engine number, the train number, the message time, the message type, the message direction, a message reason and the kilometer sign;
the PRI interface monitoring data parsing unit is configured to identify information data from the PRI interface monitoring data, combine the information data into a message packet that can be transmitted inside the train-ground integrated analysis platform, and transmit the message packet to the integrated analysis subsystem, wherein the information data comprises: the engine number, the train number, the message time, the message type, the message direction and the message reason; and
the RBC monitoring data parsing unit is configured to acquire information data from the RBC monitoring data, parse the acquired information data into a message packet that can be transmitted inside the train-ground integrated analysis platform, and transmit the message packet to the integrated analysis subsystem, wherein the information data comprises: a working state of an RBC, a connection state between the RBC and another device, an RBC fault alarm and a train state.

5. The train-ground integrated analysis platform of claim 1, wherein
the integrated analysis subsystem is configured to identify abnormal data and locate an abnormal link.

6. The train-ground integrated analysis platform of claim 5, wherein
the integrated analysis subsystem is configured to determine a fault reason and provide a maintenance suggestion by analyzing following fault features:
a first fault feature comprises a poor downlink receiving quality of a Um interface and a poor downlink or uplink receiving quality of an Abis interface, or a same problem happening multiple times to multiple trains at a same position; the fault reason is determined as radio interference; and the maintenance suggestion is to perform an electromagnetic environment test on site and find an interference source, or to clear an interference frequency;
a second fault feature comprises extremely poor communication qualities of uplink and downlink trains in a section covered by a repeater, which eventually leads to dropped calls; the fault reason is determined as multipath interference; and the maintenance suggestion is to reduce self-interference between master and slave signals;
a third fault feature comprises frequent switching failures at a boundary between road bureaus, or the same problem happening multiple times to multiple trains at the same position; the fault reason is determined as a radio network parameter setting problem; and the maintenance suggestion is to modify a source mobile switching center, MSC, configuration and add an MSC of a target cell to a source MSC list;
a fourth fault feature comprises frequent across-base transceiver station, BSC, switching failures in a BSC handover area, or the same problem happening multiple times to multiple trains at the same position; the fault reason is determined as a BSC device fault; and the maintenance suggestion is to contact a BSC device manufacturer to resolve the BSC device fault;
a fifth fault feature comprises continuous downlink high-level data link control, HDLC, frame errors of an I_{GMP-R} interface and continuous uplink HDLC frame errors of a PRI interface; the fault reason is determined as a BSC clock board fault; and the maintenance suggestion is to process according to a prompt of an alarm of a BSC network manager or to troubleshoot and replace a fault board;
a sixth fault feature comprises bidirectional BSC delinking or an alarm of a BSC service board; the fault reason is determined as a BSC service board fault; and the maintenance suggestion is to process according to a prompt of an alarm of the BSC network manager or to troubleshoot and replace a fault board;
a seventh fault feature comprises: uplink of the PRI interface only including HDLC frames of less than 20 bytes, downlink of the I_{GSM-R} interface only including HDLC frames of less than 20 bytes, or a same phenomenon happening to multiple train bodies; the fault reason is determined as a transcoder/rate adapter unit, TRAU, software fault; and the maintenance suggestion is to contact a device manufacturer to resolve the device fault;
an eighth fault feature comprises bidirectional BSC delinking due to a Resource Unavailable/Temporary failure; the fault reason is determined as a BTS hardware fault or antenna feeder fault; and the maintenance suggestion is to process according to a prompt of an alarm of the BSC network manager;
a ninth fault feature is that no HDLC frame transmitted from train to ground for Abis, A and PRI interfaces or no HDLC frame transmitted from ground to train for the Abis, Um and I_{GSM}-_{R} interfaces in a certain cell after switching, which eventually leads to a radio timeout; the fault reason is determined as an Abis interface timeslot fault; and the maintenance suggestion is to contact a device manufacturer to resolve the device fault;
a tenth fault feature comprises no data of a fault base station at the Abis interface in a certain cell after switching; the fault reason is determined as BTS dormancy; and the maintenance suggestion is to contact a device manufacturer to resolve the device fault;
an eleventh fault feature comprises continuous switching failures of a mobile terminal, MT, and MT delinking for a failed switching back to a source cell after the continuous switching failures; the fault reason is determined as a MT switching failure due to a BTS fault; and the maintenance suggestion is to contact a device manufacturer to resolve the device fault;
a twelfth fault feature comprises a lost frame in an information packet sent by an RBC to an on-board ATP; the fault reason is determined as a BTS base station clock deviation; and the maintenance suggestion is to adjust a base station clock deviation parameter and improve a clock deviation protection capability;
a thirteenth fault feature comprise a radio timeout due to bidirectional MSC delinking, a RELEASE message with a reason value of E2 9F in an MSC->BSC direction existing in monitoring data, or a DISCONNECT message with a reason value of 82 90 in an MSC->RBC direction existing in the monitoring data; the fault reason is determined as MSC delinking; and the maintenance suggestion is to contact a device manufacturer to resolve the device fault;
a fourteenth fault feature comprises the radio timeout due to the bidirectional MSC delinking, or MSC delinking with a BSC for the Resource Unavailable/Temporary failure according to the monitoring data; the fault reason is an MSC board fault; and the maintenance suggestion is to check an alarm of an MSC network manager and process according to a prompt of the alarm, or to troubleshoot and replace a fault board;
a fifteenth fault feature comprises the radio timeout due to the bidirectional MSC delinking, or the MSC delinking with the BSC for the Resource Unavailable/Temporary failure according to the monitoring data; the fault reason is the MSC board fault; and the maintenance suggestion is process according to the prompt of the alarm of the MSC network manager;
a sixteenth fault feature comprises a data transmission timeout; the fault reason is determined as an interworking function, IWF, software fault; and the maintenance suggestion is to contact a device manufacturer to resolve the device fault;
a seventeenth fault feature comprises cross-MSC switching failures of multiple train bodies; the fault reason is determines as an E interface transmission fault; and the maintenance suggestion is to process according to a prompt of a network manager;
an eighteenth fault feature comprises the bidirectional BSC delinking; the fault reason is determines as an A interface transmission fault; and the maintenance suggestion is to process according to the prompt of the network manager;
a nineteenth fault feature comprises the bidirectional BSC delinking; the fault reason is determines as an Ater interface transmission fault; and the maintenance suggestion is to process according to the prompt of the network manager;
a twentieth fault feature comprises MSC delinking with the RBC; the fault reason is determines as a PRI interface transmission fault; and the maintenance suggestion is to process according to the prompt of the network manager;
a twenty-first fault feature comprises a continuous failure of the MT to register online and a normal receiving level; the fault reason is determined as an MT fault; and the maintenance suggestion is to modify a GSM-R network configuration parameter in an MT module from 0 to 3;
a twenty-second fault feature comprises a SIM card reading and writing error, SIM card detection failure, the IGSM-R interface observing a start message outputted by a restarted MT, or the Abis interface or A interface monitoring that the MT triggers a detach message and sends an attach message; the fault reason is determined to be that the SIM card of the MT module is loosened; and the maintenance suggestion is to replace in time a card slot and the SIM card of the MT module;
a twenty-third fault feature comprises a normal uplink level and quality and a consistent level-7 downlink level in a measurement report; the fault reason is determined as an MT antenna feeder abnormality or external interference on an MT antenna feeder; and the maintenance suggestion is to inspect and maintain an antenna feeder of the MT module, or if an antenna feeder system of an on-board MT module is normal, the fault is related to the external interference, find and analyze an interference source in conjunction with a vehicle side;
a twenty-fourth fault feature comprises that uplink and downlink receiving levels of the MT module are lower than a receiving level of another MT module; the fault reason is determined as an MT module performance or antenna feeder connection abnormality; and the maintenance suggestion is to confirm whether the antenna feeder of the MT module is connected normally, tighten the antenna feeder, and replace with a flexible cable if necessary;
a twenty-fifth fault feature comprises an ATP radio connection timeout and a train control level is degraded from C3 to C2 and dose not goes back from C2 to C3; the fault reason is determined as a safe transmission unit-vehicle, STU-V, software problem; and the maintenance suggestion is to tighten a connection line of an STU-V device or update STU-V software;
a twenty-sixth fault feature comprises a radio timeout due to an ATP restart; the fault reason is determined as the ATP restart; and the maintenance suggestion is to standardize a driver's operation, require the driver to strictly close a bridge according to a process, and turn off a power source of an on-board device;
a twenty-seventh fault feature is that different train bodies fail to communicate with a faulty RBC within a same time period; the fault reason is determined as an integrated services digital network, ISDN, server abnormality; and the maintenance suggestion is to keep track of a fault condition and find out an inducer of the fault;
a twenty-eighth fault feature comprises a communication interruption between two adjacent RBCs in a handover process which leads to the radio timeout and degradation to C2; the fault reason is determined as an RBC-RBC communication timeout in the handover process; and the maintenance suggestion is to modify an internal configuration parameter of the RBC;
a twenty-ninth fault feature comprises a radio timeout due to abnormal RBC delinking; the fault reason is determined as an internal fault of the RBC; and the maintenance suggestion is to keep track of a fault condition and find out an inducer of the fault;
a thirtieth fault feature comprises that the on-board device fails to receive any application data from the RBC within a timeout period, or normal uplink and downlink receiving qualities in the measurement report; the fault reason is determined as an RBC application layer abnormality; and the maintenance suggestion is to keep track of a fault condition and find out an inducer of the fault;
a thirty-first fault feature comprises a communication interruption between the RBC and an interlocking device, or degradation of all trains within an interlocking range; the fault reason is determined as the communication interruption between the RBC and the interlocking device; and the maintenance suggestion is to check a safe data network connection between the RBC and the interlocking device.

7. The train-ground integrated analysis platform of claim 6, wherein
the integrated analysis subsystem is configured to aggregate messages parsed by all the data parsing units in the data integration subsystem, identify an engine number, a train number and a message time, and regard data of a same train within a same time period as a logical state of entire train-ground communications within the same time period.

8. The train-ground integrated analysis platform of any one of claims 1 to 7, wherein
the data acquisition subsystem is disposed in a communication front-end processor;
the data integrated subsystem is disposed in a central computer system;
the integrated analysis subsystem is disposed in the central computer system; and
the integrated exhibition subsystem is disposed in an integrated analysis platform.

9. The train-ground integrated analysis platform of claim 8, wherein
the interface unit for the on-board ground interface machine and the interface gateway of the air interface monitoring system are disposed in a communication front-end processor of an on-board monitoring data center;
the interface unit for the RBC maintenance terminal in the data acquisition subsystem is disposed in a communication front-end processor of an RBC computer room; and
the interface gateway for the C3 radio interface monitoring system in the data acquisition subsystem is disposed in a communication front-end processor of a GSM-R core network computer room.

10. The train-ground integrated analysis platform of claim 9, wherein
the communication front-end processor of the on-board monitoring data center, the communication front-end processor of the RBC computer room and the communication front-end processor of the GSM-R core network computer room implement data connections with the central computer system through a private transmission network.
